# EUROPÄISCHE PATENTANMELDUNG

(11) **EP 1 582 857 A1**
(43) Veröffentlichungstag der Anmeldung: **05.10.2005**
(21) Anmeldenummer: 04008044.2
(22) Anmeldetag: 02.04.2004
(51) Int. Cl.: G01N 21/17, G02B 17/06

(54) **Photoakustischer Gassensor mit einer Strahleranordnung mit einem Reflektor, und Verfahren zur Optimierung der Kontur des Reflektors**

(71) Anmelder: Siemens Building Technologies AG, 8008 Zürich (CH)
(72) Erfinder: Müller, Kurt, Dr., 8708 Männedorf (CH); Pleisch, Rolf, 8604 Hegnau-Volketswil (CH); Steiner, Peter, 8645 Jona (CH)
(74) Vertreter: Berg, Peter

(57) **Zusammenfassung**

Ein photoakustischer Gassensor enthält eine Messzelle (1) und einer Referenzzelle, eine Strahleranordnung und eine Mikrofonanordnung für die Messung der Druckdifferenz zwischen Messzelle (1) und Referenzzelle, wobei die Messzelle (1) ein Eintrittsfenster (6) für die von der Strahleranordnung ausgesandte Strahlung aufweist. Die Strahleranordnung ist möglichst nahe am Eintrittsfenster (6) der Messzelle (1) angeordnet ist und enthält eine Lichtquelle (4) sowie einen das von der Lichtquelle (4) ausgesandte Licht in die Messzelle (1) fokussierenden Reflektor (24), der eine ellipsoidförmige Gestalt aufweist und aus nahtlos ineinander übergehenden und durch konzentrische Abschnitte von Ellipsoiden gebildeten Segmenten besteht

Die Optimierung der Kontur des Reflektors (24) erfolgt durch die folgenden Schritte:
a. Positionierung des Scheitels (S) der Lichtquelle (4) in einem bestimmten kleinen Abstand vom Eintrittsfenster (6) der Messzelle (1);
b. Bestimmung des von der Lichtquelle (4) durch das Eintrittsfenster (6) direkt in die Messzelle (1) einfallenden Lichtes;
c. Bestimmung der einzelnen Segmente (E₁) der Kontur des Reflektors (24) derart, dass das Licht von jedem Segment (E₁) in die Messzelle (1) maximal ist;
d. Bestimmung des vom gesamten Reflektor (24) in die Messzelle (1) eingestrahlten Lichtes;
e. Verschiebung der Position des Scheitels (S) der Lichtquelle (4) und Wiederholung der Schritte b. bis d. bis eine optimale Kontur des Reflektors (24) gefunden ist, bei der die Summe der gemäss der Schritte b. und d. bestimmten Lichtanteile ein Maximum erreicht.

## Beschreibung

Die vorliegende Erfindung betrifft einen photoakustischen Gassensor mit einer Mess- und einer Referenzzelle, einer Strahleranordnung und einer Mikrofonanordnung für die Messung der Druckdifferenz zwischen Mess- und Referenzzelle, wobei die Messzelle ein Eintrittsfenster für die von der Strahleranordnung ausgesandte Strahlung und die Strahleranordnung eine Lichtquelle sowie einen das von der Lichtquelle ausgesandte Licht in die Messzelle fokussierenden Reflektor aufweist.

Damit möglichst viele solcher Sensoren ohne zusätzliche Hilfsspeisung an eine gemeinsame Zentrale angeschlossen werden können, wird verlangt, dass die Sensoren einen möglichst niedrigen Energieverbrauch aufweisen. Das bedeutet mit anderen Worten, dass pro Sensor relativ wenig Leistung zur Verfügung steht, wodurch die Sensorsignale relativ schwach werden, so dass eine Balance zwischen dem Energieverbrauch und dem Signal-/Rauschverhältnis gefunden werden muss. Eine Möglichkeit für die Lösung dieser Aufgabe besteht darin, den Wirkungsgrad der Strahleranordnung zu erhöhen und möglichst viel Strahlung der Strahleranordnung in die Messzelle gelangen zu lassen.

Bei den bisher bekannten photoakustischen Gassensoren der eingangs genannten Art sind entweder keine Massnahmen für die Erhöhung des Wirkungsgrads der Strahleranordnung vorgesehen, oder es werden durch ebene Spiegel oder durch Parabolspiegel gebildete Reflektoren verwendet. So ist beispielsweise bei dem in der DE-A-40 18 393 beschriebenen photoakustischen Gassensor lediglich erwähnt, dass die Strahleranordnung.einen Infrarotstrahler enthält.

Durch die Erfindung soll nun ein photoakustischer Gassensor der eingangs genannten Art angegeben werden, dessen Strahleranordnung einen möglichst hohen Wirkungsgrad aufweist, so dass der Gassensor mit einem möglichst niedrigen Energieverbrauch betrieben werden kann.

Diese Aufgabe wird erfindungsgemäss dadurch gelöst, dass die Strahleranordnung möglichst nahe am Eintrittsfenster der Messzelle angeordnet ist, und dass der Reflektor eine ellipsoidförmige Gestalt aufweist und aus nahtlos ineinander übergehenden und durch konzentrische Abschnitte von Ellipsoiden gebildeten Segmenten besteht.

Eine erste bevorzugte Ausführungsform des erfindungsgemässen Gassensors ist dadurch gekennzeichnet, dass die Lichtquelle durch eine Mikroglühlampe gebildet und axial in den Sensor eingebaut ist.

Eine zweite bevorzugte Ausführungsform ist dadurch gekennzeichnet, dass der Reflektor aus Metall oder verspiegeltem Kunststoff besteht.

Die Erfindung betrifft weiter ein Verfahren zur Optimierung der Kontur des genannten Reflektors. Dieses Verfahren ist gekennzeichnet durch die folgenden Schritte:
a. Positionierung des Scheitels der Lichtquelle in einem bestimmten kleinen Abstand vom Eintrittsfenster der Messzelle;
b. Bestimmung des von der Lichtquelle durch das Eintrittsfenster direkt in die Messzelle (1) einfallenden Lichtes;
c. Bestimmung der einzelnen Segmente der Kontur des Reflektors derart, dass das Licht von jedem Segment in die Messzelle maximal ist;
d. Bestimmung des vom gesamten Reflektor in die Messzelle eingestrahlten Lichtes; und
e. Verschiebung der Position des Scheitels der Lichtquelle und Wiederholung der Schritte b. bis d. bis eine optimale Kontur des Reflektors gefunden ist, bei der die Summe der gemäss der Schritte b. und d. bestimmten Lichtanteile ein Maximum erreicht.

Die Bestimmung der einzelnen Segmente der Kontur des Reflektors erfolgt durch die folgenden Schritte:
a. Bestimmung des der Lichtquelle benachbarten, inneren Anfangspunkts des Reflektors, der Breite des ersten Segments und eines auf der Achse der Messzelle liegenden ersten Punktes;
b. Legen eines Ellipsoids durch den genannten inneren Anfangspunkt, dessen erster Brennpunkt am Ort der Wendel der Lichtquelle liegt, und dessen zweiter Brennpunkt durch den genannten ersten Punkt auf der Achse der Messzelle gebildet ist;
c. Verschiebung des genannten ersten Punktes in axialer Richtung in die Position eines zweiten Punktes, in der das vom ersten Reflektorsegment in die Messzelle gestrahlte Licht maximal ist; wodurch ein zweiter Punkt auf der Kontur des Reflektors bestimmt wird, welcher vom genannten inneren Anfangspunkt einen der Breite des ersten Segments entsprechenden Abstand aufweist;
d. Bestimmung der Breite des zweiten Segments und Legen eines Ellipsoids durch den genannten zweiten Punkt auf der Kontur des Reflektors, wobei der erste Brennpunkt dieses Ellipsoids durch die Wendel der Lichtquelle und der zweite Brennpunkt durch den genannten zweiten Punkt auf der Achse der Messzelle gebildet ist;
e. Verschiebung des genannten zweiten Punktes in axialer Richtung in die Position eines dritten Punktes, in der das vom zweiten Reflektorsegment in die Messzelle gestrahlte Licht maximal ist; wodurch ein dritter Punkt auf der Kontur des Reflektors bestimmt wird, welcher vom genannten zweiten Punkt auf dem Reflektor einen der Breite des zweiten Segments entsprechenden Abstand aufweist;
f. Wiederholung der Schritte d. und e. bis die Kontur des Reflektors vollständig ist.

Der genannte kleine Abstand zwischen dem Scheitel der Lichtquelle und dem Eintrittsfenster der Messzelle beträgt vorzugsweise nicht mehr als 3 mm.

Im Folgenden wird die Erfindung anhand eines Ausführungsbeispiels und der Zeichnungen näher erläutert; es zeigt:
- Fig. 1: eine Explosionsdarstellung eines erfindungsgemässen photoakustischen Gassensors,
- Fig. 2: ein Detail des Gassensors von Fig. 1,
- Fig. 3: eine erste schematische Skizze zur Erläuterung der Herstellung des Gassensors,
- Fig. 4: eine zweite schematische Skizze zur Erläuterung der Herstellung des Gassensors; und
- Fig. 5: eine Schnittdarstellung eines Details der Gassensors von Fig. 1.

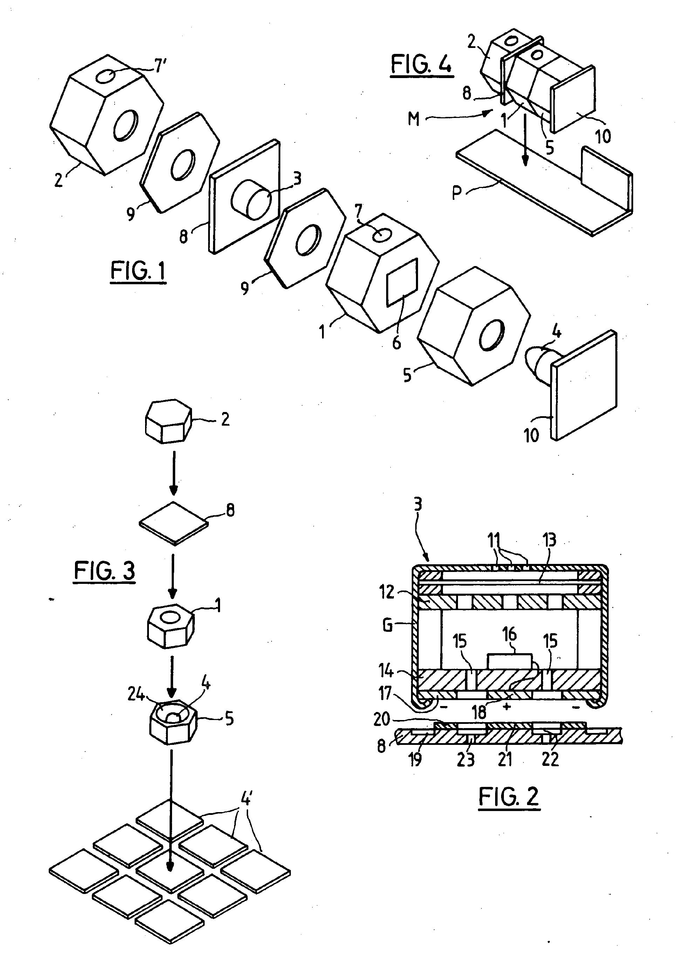

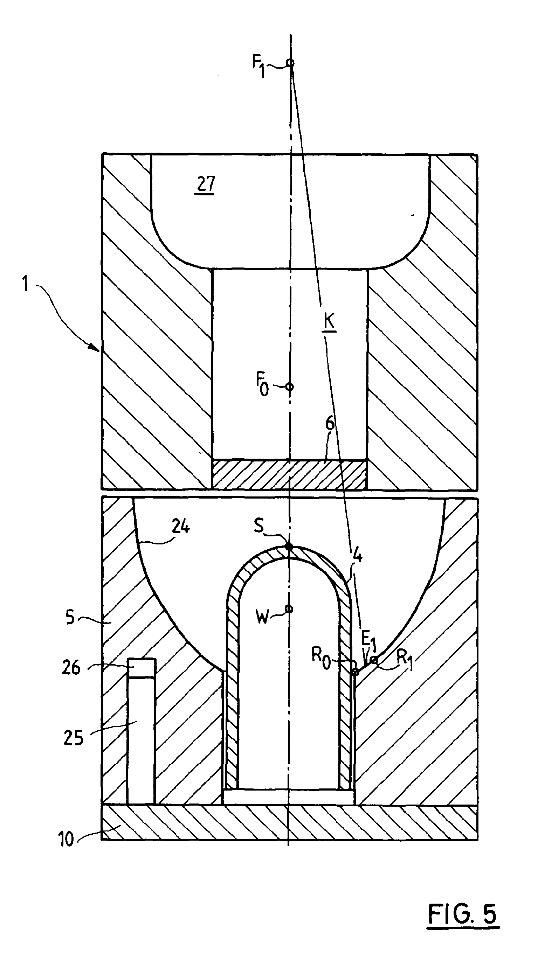

Der in Figur 1 dargestellte photoakustische Gassensor besteht aus einer Messzelle 1, einer Referenzzelle 2, einem zwischen den beiden Zellen 1 und 2 angeordneten bidirektionalen Differenzmikrofon 3, einer der Messzelle 1 zugeordneten Mikroglühlampe 4 und einem Reflektorgehäuse 5 mit einem Reflektor 24 (Fig. 5) zur Bündelung der von der Mikroglühlampe 4 ausgesandten Strahlung auf ein in der der Mikroglühlampe 4 zugewandten Seitenwand der Messzelle 1 angeordnetes Fenster, in welches ein Infrarot-Bandpassfilter 6 eingesetzt ist. Messzelle 1 und Referenzzelle 2 sind bezüglich Aufbau und Dimensionen absolut identisch. Sowohl die Messzelle 1 als auch die Referenzzelle 2 sind an einer äusseren Seitenwand mit einer Bohrung versehen, in welche eine gaspermeable Membran 7 beziehungsweise 7' eingesetzt ist. Das Differenzmikrofon 3 ist auf einem Mikrofonprint 8 montiert und zu beiden Seiten des Differenzmikrofons 3 ist je eine Dichtung 9 (optional) vorgesehen. Die Mikroglühlampe 4 ist ebenfalls auf einem Lampenprint montiert, der mit dem Bezugszeichen 10 bezeichnet ist.

Aus Gründen der Strahlungsleistung und der Fokussierung der von der Mikroglühlampe 4 ausgesandten Strahlung ist das Reflektorgehäuse 5 möglichst nahe an der Messzelle 1 angeordnet, braucht aber nicht zwingend mit dieser verbunden zu sein. Aus optischen Überlegungen und wegen der Ausrichtung der Wendel der Mikroglühlampe 4 ist die letztere in der Längsachse des Gassensors eingebaut. Die Mikroglühlampe 4 ist auf den Lampenprint 4 gelötet, der mit dem Reflektorgehäuse 5 stabil verbunden ist. Der Reflektor 24 ist so ausgebildet, dass er die in die Messzelle 1 eintretende Strahlung der Mikroglühlampe 4 maximiert. Er besteht aus konzentrischen Abschnitten von Ellipsoiden, die nahtlos ineinander übergehen, und von denen jedes für sich die auftreffende Strahlung der Mikroglühlampe 4 optimal in die Messzelle fokussiert.

Die Mikroglühlampe 4 emittiert Licht über ein breites Spektrum bis in den Infrarotbereich; in den meisten Fällen wird für die Gasdetektion eine Spektrallinie im Infrarotbereich verwendet. Das Infrarot-Bandpassfilter 6 hat einen für das zu detektierende Gas charakteristischen Durchlassbereich in Form eines schmalen Spektralbandes, welches für den Nachweis von CO₂ bei 4.25 µm, von NH₃ bei 10 µm und von CH₄ bei 3.4 µm liegt. Das nachzuweisende Gas gelangt durch die beiden gaspermeablen Membranen 7 und 7' in die Messzelle 1 beziehungsweise in die Referenzzelle 2. Das in der Messzelle 1 anwesende Gas wird durch moduliertes Licht der Mikroglühlampe 4 bestrahlt. Das Gas absorbiert die Lichtstrahlung und erwärmt sich dadurch. Daraus entsteht eine thermische Ausdehnung und, entsprechend der Modulation der Lichtstrahlung, eine periodische Druckschwankung, so dass eine akustische Druckwelle verursacht wird, deren Stärke in direktem Verhältnis zur Konzentration des Gases steht.

Der Störschall, der von aussen auf die Membranen 7, 7' trifft, wird durch diese abgeschwächt in der Messzelle 1 und der Referenzzelle 2 je mit identischer Stärke auftreten. Dieser Störschall kompensiert sich somit direkt an der Membran des Mikrofons 3, ohne dass grosse Signale entstehen, die elektronisch subtrahiert werden müssten. Da zu beiden Seiten der Mikrofonmembran die selben Druckschwankungen herrschen, findet an dieser eine direkte physikalische Subtraktion der durch Störschall verursachten Signale statt, so dass die Mikrofonmembran gar nicht erst ausgelenkt wird. Die Mikrofonmembran liefert somit unmittelbar den durch das Gas in der Messzelle 1 verursachten akustischen Druck und damit die gesuchte Konzentration.

Das Mikrofon 3 ist ein so genanntes "Noise Cancelling" Mikrofon, wie es in Mobiltelefonen Anwendung findet. Wenn dieses Mikrofon als Differenzmikrofon verwendet und zwischen zwei akustisch praktisch geschlossenen Zellen, nämlich zwischen Messzelle 1 und Referenzzelle 2, eingebaut wird, zeigt es sehr gute, auf die Aufgabenstellung zugeschnittene Eigenschaften.

In Fig. 2 ist das Mikrofon 3 im Schnitt dargestellt. Dieses besteht darstellungsgemäss aus einem einseitig offenen Gehäuse G von der Form einer Dose, deren Boden die Vorderseite des Mikrofons bildet. In diesem Boden sind Bohrungen 11 für den Schalldurchtritt zur der zwischen dem Boden des Gehäuses 10 und einer Metall-Backelektrode 12 eingespannten Mikrofonmembran 13 aus metallisiertem Kunststoff vorgesehen. Die Seitenwand des Gehäuses 18 ist an der Rückseite des Mikrofons umgebördelt und fixiert eine Rückwand 14, die mit kleinen Ausgleichsbohrungen, so genannten Back Ports 15 versehen ist und an ihrer der Metall-Backelektrode 12 zugewandten Innenseite einen FET 16 und an ihrer Aussenseite zwei Kreiselektroden 17 und 19 trägt.

Die Back Ports 15 sind für tiefe Frequenzen genügend gross und machen den Frequenzgang des Mikrofons 3 bis zur unteren Eckfrequenz flach. Diese untere Eckfrequenz ist durch die Kapazität der Membran 13 und den Eingangswiderstand des verwendeten Impedanzwandlers bestimmt und liegt deutlich unter 10Hz liegt, vorzugsweise zwischen 1 und 4Hz, so dass das Signal bei der Nutzfrequenz von etwa 20 bis 30Hz von der unteren Eckfrequenz nur unwesentlich beeinflusst wird.

Das Mikrofon 3 ist auf dem Mikrofonprint 8 befestigt, welcher eine Ringnut 19 für die Positionierung der Bördelung des Mikrofons 3, ringförmige Kontaktstege 20 und 21 für die beiden Kreiselektroden 17 beziehungsweise 18, sowie eine Ringnut 22 mit einigen vom Grund der Ringnut durch den Mikrofonprint 8 geführten Bohrungen 23 aufweist. Die Bohrungen 23 und die Ringnut 22 ermöglichen die Zufuhr von Luft und Schall von aussen zu den Back Ports 15, ohne dass diese auf irgend-welche Bohrungen im Mikrofonprint 8 ausgerichtet werden müssen.

Das Mikrofon 3 und der Mikrofonprint 8 brauchen beim Bestücken nicht ausgerichtet zu werden, was eine leichte Montage mit einem Roboter ermöglicht. Die Montage wird noch durch die Ringnut 19 erleichtert, die das Mikrofon 3 mit seiner Gehäusebördelung beim Platzieren automatisch in die richtige Position führt. Die Kreiselektroden 17 und 18 werden mit der Leiterplatte 17 mit Leitepoxy verklebt und elektrisch verbunden. Die Aussenkontur von Messzelle 1, Referenzzelle 2 und des Reflektorgehäuse 5 ist durchgehend gleichbleibend, so dass sich die Teile als Strangprofile kostengünstig ziehen lassen und die notwendige Bearbeitung auf ein Minimum reduziert wird.

Im Rahmen des Herstellungsprozess des Gassensors erfolgt die Fertigung/Bereitstellung der einzelnen Komponenten des Sensors, d.h. des Reflektorgehäuses 5, der beiden Zellkörper für Messzelle 1 und Referenzzelle 2, des Bandpassfilters 6, des Mikrofons 3 und der Mikroglühlampe 4. Das Bandpassfilter 6 wird in die Messzelle 1 eingeklebt und dann wird das Mikrofon 3 auf dem Mikrofonprint 8 montiert. Messzelle 1 und Referenzzelle 2 bestehen vorzugsweise aus Aluminium oder Zinkdruckguss.

Anschliessend werden diese Komponenten zu einem aus Fig. 4 ersichtlichen Messmodul M zusammen gesetzt, was durch die in Fig. 3 dargestellte Batch-Stapelverarbeitung erfolgt. Es wird jeweils eine Referenzzelle 2 mit dem bestückten Mikrofonprint 8, der Messzelle 1, dem den Reflektor 24 enthaltenden Reflektorgehäuse 5, in welches die Mikroglühlampe 4 eingesetzt ist, und dem bestückten Lampenprint 10 zu einem Stapel verbunden, was entweder durch Kleben oder durch Zusammenspannen erfolgt. Im ersten Fall sind die Dichtungen 9 (Fig. 1) nicht erforderlich, weil durch die Klebeverbindung das Innere der Zellkörper 1 und 2 abgedichtet wird. Das Zusammenspannen erfolgt mit Hilfe eines in Längsrichtung des Sensors (Richtung der Pfeile in Fig. 3) wirkenden federnden Organs, beispielsweise einer Klammer.

In die Messzelle 1 und die Referenzzelle 2 des fertigen Messmoduls M werden anschliessend die Membranen 7, 7' eingesetzt und schliesslich wird das Messmodul M auf einen Modulprint P bestückt, was durch Kleben oder Löten erfolgen kann. Das vormontierte Messmodul M ist komplett und funktionsfähig und kann vorab als Einheit geprüft werden, bevor es auf dem Modulprint P bestückt wird. Das Messmodul M kann auf beliebigen anderen Leiterplatten wie ein Bauteil als Sub-Modul eingefügt werden, wobei für das Mikrofon 3, den Reflektor 24 und die Mikroglühlampe 4 keine Toleranz- oder Ausrichtprobleme entstehen.

Fig. 5 zeigt in einer stark vergrösserten Schnittdarstellung die Messzelle 1, das Reflektorgehäuse 5 mit dem Reflektor 24 sowie den Lampenprint 10 mit der Mikroglühlampe 4. Die Mikroglühlampe 4 ist auf dem Lampenprint 10 verlötet und über einen Teil ihrer Länge in einer Bohrung des Reflektorgehäuses 5 geführt, an welche gegen die Messzelle 1 hin der Reflektor 24 anschliesst. Lampenprint 10 und Reflektorgehäuse 5 sind miteinander stabil verbunden; darstellungsgemäss ist auf dem Lampenprint 10 ein Verbindungsstift 25 befestigt, der in eine im Reflektorgehäuse 5 vorgesehene Bohrung 26 verpresst ist. Die Messzelle enthält darstellungsgemäss eine in einem Gehäuse angeordnete Messkammer K, welche an ihrer dem Reflektor 24 zugewandten Vorderseite durch das Infrarot-Bandpassfilter 6 abgeschlossen ist und an ihrer Hinterseite in eine zur Aufnahme des Differenzmikrophons 3 vorgesehene Erweiterung 27 übergeht.

Der Reflektor 24 ist vorzugsweise direkt aus dem Reflektorgehäuse 5 heraus gearbeitet und besteht aus Metall oder verspiegeltem Kunststoff. Wichtig ist, dass die infrarot-optischen Eigenschaften der Reflektoroberfläche über die geplante Einsatzdauer von beispielsweise 10 Jahren konstant bleiben.

Zur Optimierung der Kontur des Reflektors 24 wird die Lage des Scheitels S der Mikroglühlampe 4 in einem Abstand von beispielsweise maximal 3 mm von dem das Infrarot-Bandpassfilter 6 tragenden Eintrittsfenster der Messzelle 1 festgelegt, und es wird das direkt von der Lampenwendel W durch das Eintrittsfenster in die Messzelle 1 einfallende Licht bestimmt. Dann wird der innere Anfangspunkt R₀ der Reflektorkontur unmittelbar an der Mikroglühlampe 4, die Breite des ersten Reflektorsegments E₁ sowie ein auf der Achse der Messzelle 1 liegender erster Punkt F₀ bestimmt. Schliesslich wird durch den inneren Anfangspunkt R₀ der Reflektorkontur ein Ellipsoid gelegt, dessen erster Brennpunkt am Ort der Wendel W der Mikroglühlampe 4 liegt und dessen zweiter Brennpunkt durch den ersten Punkt F₀ auf der Achse der Messzelle 1 gebildet ist. Dann wird der erste Punkt F₀ so lange axial in die Position eines zweiten Punktes F₁ verschoben, bis das vom Reflektorsegment E₁ in die Messzelle 1 fokussierte Licht der Mikroglühlampe 4 maximal ist. Durch diese Schritte wird der Punkt R₁ auf der Reflektorkontur bestimmt, der vom genannten inneren Anfangspunkt R₀ einen der Breite des ersten Reflektorsegments E₁ entsprechenden Abstand aufweist.

Anschliessend wird die Breite des zweiten Reflektorsegments bestimmt und ein Ellipsoid durch den Punkt R₁ auf der Kontur des Reflektors 24 gelegt, wobei der erste Brennpunkt dieses Ellipsoids durch die Wendel W der Mikroglühlampe 4 und der zweite Brennpunkt durch den genannten zweiten Punkt F₁ auf der Achse der Messzelle 1 gebildet ist. Dann wird der zweite Punkt F₁ in axialer Richtung in die Position eines dritten Punktes auf der Sensorachse verschoben, in welcher Position das vom zweiten Reflektorsegment in die Messzelle gestrahlte Licht maximal wird. Dadurch wird ein weiterer Punkt auf der Kontur des Reflektors 24 bestimmt, der vom Punkt R₁ einen der Breite des zweiten Segments entsprechenden Abstand aufweist.

Auf diese Weise werden weitere Reflektorsegmente bestimmt bis die Kontur des Reflektors 24 vollständig ist.

Die Addition des Direktlichts und des Lichts über den Reflektor 24 ergibt das gesamte Licht in der Messzelle 1 für diesen ersten Optimierungsumgang. Anschliessend verschiebt man den Lampenscheitel S und führt wieder die beschriebenen Schritte durch bis eine optimale, vollständige Kontur gefunden ist. In einer einfacheren Ausführung könnte der Reflektor 24 durch ein einziges Ellipsoid gebildet sein.

## Patentansprüche

1. Photoakustischer Gassensor mit einer Mess- und einer Referenzzelle (1 bzw. 2), einer Strahleranordnung und einer Mikrofonanordnung für die Messung der Druckdifferenz zwischen Mess- und Referenzzelle (1 bzw. 2), wobei die Messzelle (1) ein Eintrittsfenster (6) für die von der Strahleranordnung ausgesandte Strahlung und die Strahleranordnung eine Lichtquelle (4) sowie einen das von der Lichtquelle (4) ausgesandte Licht in die Messzelle (1) fokussierenden Reflektor (24) aufweist, **dadurch gekennzeichnet, dass** die Strahleranordnung möglichst nahe am Eintrittsfenster (6) der Messzelle (1) angeordnet ist, und dass der Reflektor (24) eine ellipsoidförmige Gestalt aufweist und aus nahtlos ineinander übergehenden und durch konzentrische Abschnitte von Ellipsoiden gebildeten Segmenten (E₁) besteht.

2. Photoakustischer Gassensor nach Anspruch 1, **dadurch gekennzeichnet, dass** die Lichtquelle (4) durch eine Mikroglühlampe gebildet und axial in den Sensor eingebaut ist.

3. Photoakustischer Gassensor nach Anspruch 1 oder 2, **dadurch gekennzeichnet, dass** der Reflektor (24) aus Metall oder verspiegeltem Kunststoff besteht.

4. Photoakustischer Gassensor nach einem der Ansprüche 1 bis 3, **dadurch gekennzeichnet, dass** die Lichtquelle (4) in der Rotationsachse dieser Ellipsoide angeordnet ist.

5. Verfahren zur Optimierung der Kontur des Reflektors (24) nach Anspruch 1, **gekennzeichnet durch** die folgenden Schritte:
a. Positionierung des Scheitels (S) der Lichtquelle (4) in einem bestimmten kleinen Abstand vom Eintrittsfenster (6) der Messzelle (1);
b. Bestimmung des von der Lichtquelle (4) **durch** das Eintrittsfenster (6) direkt in die Messzelle (1) einfallenden Lichtes;
c. Bestimmung der einzelnen Segmente (E₁) der Kontur des Reflektors (24) derart, dass das Licht von jedem Segment (E₁) in die Messzelle (1) maximal ist;
d. Bestimmung des vom gesamten Reflektor (24) in die Messzelle (1) eingestrahlten Lichtes; und
e. Verschiebung der Position des Scheitels (S) der Lichtquelle (4) und Wiederholung der Schritte b. bis d. bis eine optimale Kontur des Reflektors (24) gefunden ist, bei der die Summe der gemäss der Schritte b. und d. bestimmten Lichtanteile ein Maximum erreicht.

6. Verfahren nach Anspruch 5, **dadurch gekennzeichnet, dass** der bestimmte kleine Abstand zwischen dem Scheitel (S) der Lichtquelle (4) und dem Eintrittsfenster (6) der Messzelle (1) höchstens 3 mm beträgt.

7. Verfahren nach Anspruch 5 oder 6, **dadurch gekennzeichnet, dass** die Bestimmung der einzelnen Segmente (E₁) der Kontur des Reflektors (24) durch folgende Schritte erfolgt:
a. Bestimmung des der Lichtquelle (4) benachbarten, inneren Anfangspunkts (R₀) des Reflektors (24), der Breite des ersten Segments (E₁) und eines auf der Achse der Messzelle (1) liegenden ersten Punktes (F₀);
b. Legen eines Ellipsoids durch den genannten inneren Anfangspunkt (R₀), dessen erster Brennpunkt am Ort der Wendel (W) der Lichtquelle (4) liegt, und dessen zweiter Brennpunkt durch den genannten ersten Punkt (F₀) auf der Achse der Messzelle (1) gebildet ist;
c. Verschiebung des genannten ersten Punktes (F₀) in axialer Richtung in die Position eines zweiten Punktes (F₁), in der das vom ersten Reflektorsegment (E₁) in die Messzelle (1) gestrahlte Licht maximal ist; wodurch ein zweiter Punkt (R₁) auf der Kontur des Reflektors (24) bestimmt wird, welcher vom genannten inneren Anfangspunkt (R₀) einen der Breite des ersten Segments (E₁) entsprechenden Abstand aufweist;
d. Bestimmung der Breite des zweiten Segments und Legen eines Ellipsoids durch den genannten zweiten Punkt (R₁) auf der Kontur des Reflektors (24), wobei der erste Brennpunkt dieses Ellipsoids durch die Wendel (W) der Lichtquelle (4) und der zweite Brennpunkt durch den genannten zweiten Punkt (F₁) auf der Achse der Messzelle (1) gebildet ist;
e. Verschiebung des genannten zweiten Punktes (F₁) in axialer Richtung in die Position eines dritten Punktes, in der das vom zweiten Reflektorsegment in die Messzelle (1) gestrahlte Licht maximal ist; wodurch ein dritter Punkt auf der Kontur des Reflektors (24) bestimmt wird, welcher vom genannten zweiten Punkt (R₁) auf dem Reflektor (24) einen der Breite des zweiten Segments entsprechenden Abstand aufweist;
f. Wiederholung der Schritte d. und e. bis die Kontur des Reflektors (24) vollständig ist.
